# EUROPEAN PATENT SPECIFICATION

(11) **EP 0 565 016 B1**
(45) Date of publication and mention of the grant of the patent: **09.09.1998**
(21) Application number: 93105585.9
(22) Date of filing: 05.04.1993
(51) Int. Cl.: H01Q 21/24, H01Q 7/00

(54) **Low profile eliptically polarised antenna**
Flache, elliptisch polarisierte Antenne
Antenne à polarisation élliptique à structure mince

(30) Priority: 10.04.1992 AU 1818/92
(43) Date of publication of application: 13.10.1993
(73) Proprietor: ALCATEL ALSTHOM COMPAGNIE GENERALE D'ELECTRICITE, 75008 Paris (FR)
(72) Inventor: McDonald, Noel, Dr., Croydon, 3136, Vic. (AU)
(74) Representative: Brose, Gerhard, Dipl.-Ing.

(56) References cited:
- FR-A- 2 584 872
- US-A- 4 160 978
- US-A- 5 142 292
- ELECTRONICS AND COMMUNICATIONS IN JAPAN PART I: COMMUNICATIONS vol. 74, no. 2, February 1991, NEW YORK US pages 108 - 115 KUMON ET AL. 'An Analysis of the Crossed Twin Delta Loop Antennas with Circular Polarization'

## Description

The invention relates to an antenna array as set out in the preamble of claim 1.

The invention moreover relates to a transportable antenna, particularly, though not exclusively, for use with a satellite based mobile communication system, such as, for example, MOBILESAT, designed for users who operate in areas outside existing communications infrastructures.

Such transportable antennas are intended to be used, inter alia, in portable terminals such as, for example, suitcase terminals, associated with the aforementioned satellite based mobile communication system; though such antennas may also be used in stationary applications associated with the system.

A known antenna arrangement possessing characteristics suitable for use with a satellite based mobile communication system of the aforementioned type is a helical antenna comprising a single conductor or multiple conductors wound into a helical shape which extends from a base. A disadvantage of this known antenna is that its shape and dimensions are such that it is not suitable for portable terminals which require a compact antenna.

Another known antenna arrangement is a microstrip line antenna comprising a strip of conductive material in intimate contact with one side of a planar dielectric substrate, with a thin-film ground plane on the other side of the substrate, the conductive strip being in the form of an elongated serial array of interconnected loops. Although this lastmentioned known antenna avoids the disadvantageous shape and dimension of the helical antenna, because the ground plane and the dielectric substrate are in intimate contact, the dielectric properties of the substrate are critical and introduce design problems.

A still further disadvantage of the lastmentioned known antenna is the requirement that it must be loaded with a matching load resistance, and therefore when the antenna is in a radiating mode, a proportion of radiating power is dissipated in the load resistance thus detracting from its efficiency.

Another elongated serial array of interconnected loops and loaded with a matching load resistance is known US 4,160,978. In addition to the aforementioned example this array suffers from the fact, that even the electrical conductive parts cannot be arranged in a coplanar manner.

An object of the present invention is to provide an improved low profile circularly polarised antenna which avoids the disadvantages of the aforementioned prior art.

According to the invention this is achieved by an antenna array with the features of claim 1. Further advantageous features of the invention are defined in the subclaims.

In order that the invention may be readily carried into effect, embodiments thereof will now be described in relation to the drawings, in which:

Figure 1 is a top plan view of a first configuration of radiating conductors according to the invention.

Figure 2 is a top plan view of a second configuration of radiating conductors according to the invention.

Figure 3 is a schematic perspective view of an antenna incorporating the configuration of conductors shown in Figure 1.

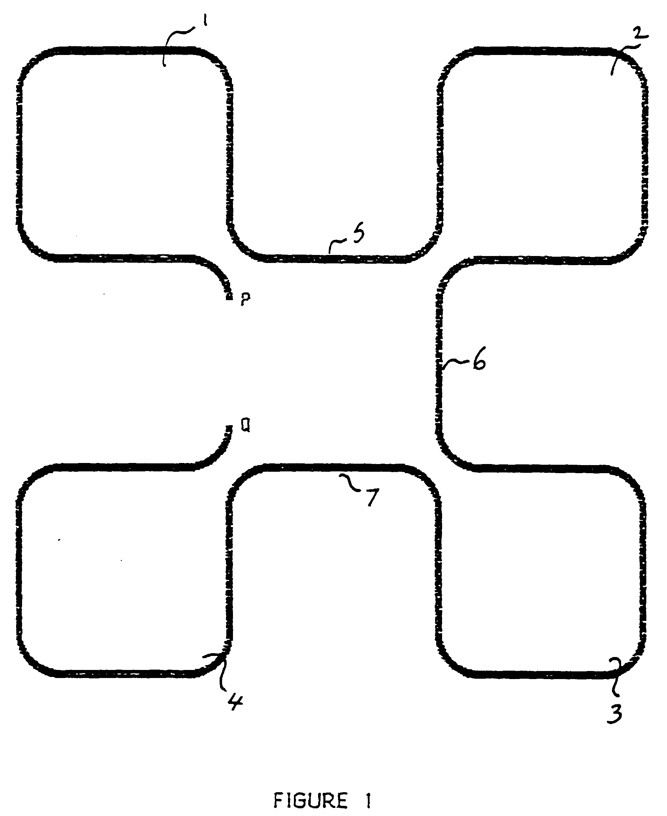

Referring to Figure 1, the configuration comprises a planar array of four serially connected complete loops 1, 2, 3 and 4 of wire or other conductive material, though it will be understood that the array need not be essentially planar. Each of the said loops is rotated at approximately 90° from an adjacent loop. The arc length of each loop is approximately 1 wavelength at the frequency of antenna operation. Loops 1, 2, 3 and 4 are interconnected by respective linear conductors 5, 6 and 7, the length of each linear conductor being approximately 1/4 wavelength at the frequency of antenna operation. Each end of the array of loops terminate in a feed point P and Q respectively.

In operation, a travelling wave of current around loop 1 will radiate an eliptically polarised wave in two directions, each direction being normal to the plane in which the planar array lies. Loop 2 is similar to loop 1 except that it is rotated by approximately 90°. Linear conductor 5 is 1/4 wavelength long, and thus the combined effects of the wavelength of loop 1, the wavelength of linear conductor 5 and the rotation of loop 2 relative to loop 1 cause radiation from loop 2 to be approximately in phase with a radiation from loop 1, thereby increasing radiation in the direction normal to the plane in which the array lies. This behaviour continues with similar combined effects of linear conductors 6 and 7 and loops 3 and 4.

The array described above may be mounted in a predetermined spaced relationship with a conductive ground-plane so that the radiation from one side of the array is reflected and added to the radiation from the opposite side.

Preferably, the array of loops and interconnecting linear conductors are mounted on a support base of insulating material and may be advantageously in the form of conductive tracks of a printed circuit board.

Feed-point Q may be left open-circuited or terminated in an appropriate impedance. For example, consider the case in which the array of Figure 1 is mounted adjacent a ground plane and feed-point is driven relative to that ground-plane. If feed-point Q is terminated with an impedance approximating the characteristic impedance of the array above the ground-plane, then the current in the conductors will approximate a single travelling wave and the radiation from the array will be nearly circularly polarised. Any other terminating impedance or no termination at all will cause a current to be reflected from feed-point Q and that reflected current will radiate in an opposite polarisation sense from the incident current.

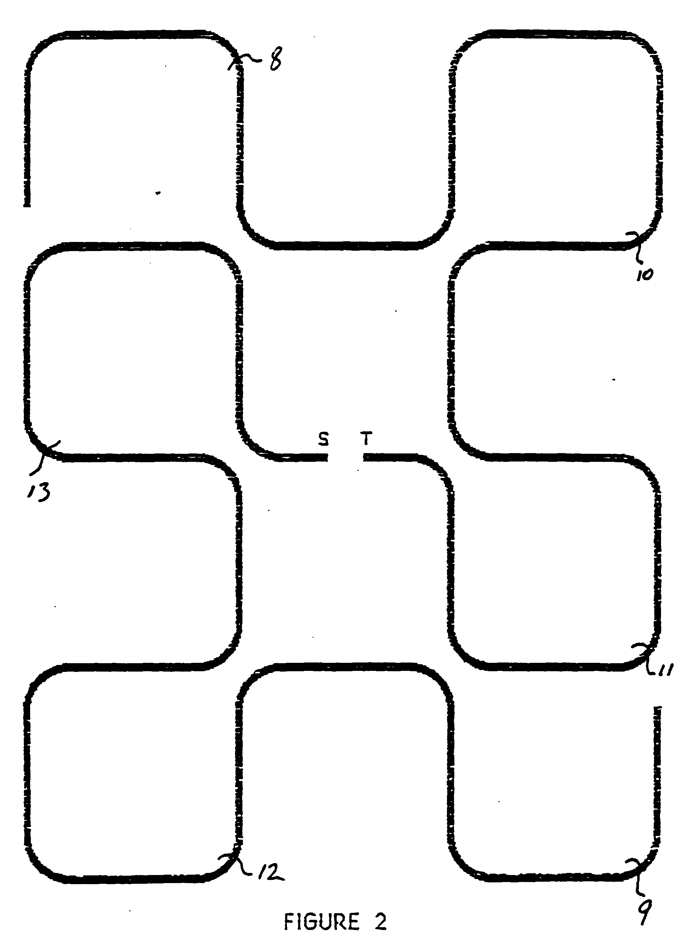

A balanced version of the array is shown in Figure 2. This array comprises two partial loops 8 and 9 and four complete loops 10, 11, 12 and 13, and two feed-points S and T, forming two sections, one section comprising partial loop 8 and complete loops 10 and 11 terminating in feed-point T; the other section comprising partial loop 9 and complete loops 12 and 13 terminating in feed-point S.

In operation, if feed-points S and T are driven with a balanced feed such that S and T are driven with voltages of equal amplitude and opposite phase, the radiation from the section connected to feed-point T will reinforce the radiation from the section of the array connected to feed-point S. Opposite sense polarisation will be obtained if a mirror image, or inversion, of the configuration is used.

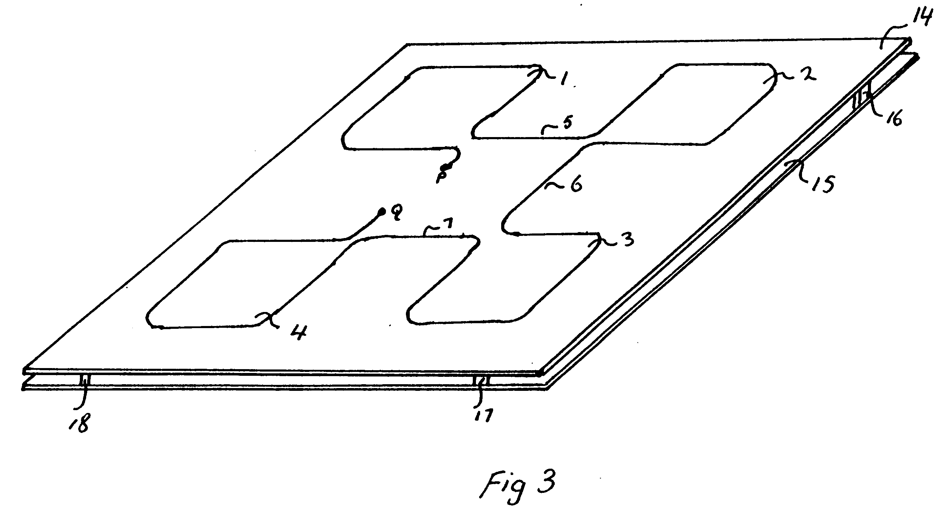

Referring to Figure 3, the configuration of Figure 1 is supported on a planar substrate 14 of insulating material. A conductive ground-plane 15 is supported in a predetermined fixed space relationship with substrate 14 by spacers 16, 17 and 18.

Referring to the various embodiments described above, it will be understood that the shape of the loops may be circular, square or polygonal, and that the interconnecting conductors may be linear or curved.

While the present invention has been described with regard to many particulars it is understood that equivalents may be readily substituted without departing from the scope of the invention.

## Claims

1. An antenna array for transmitting or receiving a radio signal of a given wavelength, said array comprising a predetermined plurality of planar loops (1, ..., 4, 8, ..., 13) serially interconnected by connecting sections (5,6,7), wherein each said loop is substantially symmetrical about an axis of symmetry joining the centre of said loop to a point where said loop is interconnected to a connecting section and has an arc length of approximately one said given wavelength,characterised in that said antenna array forms a chess-board like arrangement, with each loop within one square of said chess-board and with two adjacent loops separated by one intermediate square, in that connecting sections between adjacent loops have a length of approximately one-quarter wavelength and connect said loops between adjacent corners of such squares, whereby the electrical length from one point of a loop to a point of an adjacent loop connected therewith is one full wavelength, for points which have the same orientation with respect to the centers of the respective loops, and in that all loops and connecting sections lie within the same plane.

2. An antenna as claimed in claim 1, wherein at least one but not all loops (8, 9) are implemented only in part.

3. An antenna as claimed in any one of the preceding claims, comprising two said arrays (11, 10, 8; 13, 12, 9).

4. An antenna as claimed in any one of the preceding claims, wherein electrical conductive parts are of wire.

5. An antenna as claimed in claim 4, wherein said loops and said connecting sections of each array are formed from a single length of said wire.

6. An antenna as claimed in claim 1, wherein said loops and said connecting sections are supported in an electrically insulated manner on a support means.

7. An antenna as claimed in claim 6, wherein said support means is in the form of a planar panel.

8. An antenna as claimed in any of claims 1 to 3, wherein said loops and said connecting sections are formed by a conductive track on a printed circuit board (14).

9. An antenna as claimed in any one of the preceding claims, wherein one end of each said array forms a feed-point means (P, S, T) for said signal.

10. An antenna as claimed in any one of the preceding claims, wherein said symmetrical loops are circular.

11. An antenna as claimed in any one of claims 1 to 9, wherein said symmetrical loops are square or rectangular.

12. An antenna as claimed in any one of claims 1 to 9, wherein said symmetrical loops are polygonal.

13. An antenna as claimed in any one of the preceding claims, wherein said connecting sections are straight.

14. An antenna as claimed in any one of the preceding claims , including a conductive ground-plane means (15) arranged in a predetermined fixed space relationship (16, 17, 18) with said arrays.

## Patentansprüche

1. Antennenmatrix zum Senden oder Empfangen eines Funksignals mit einer gegebenen Wellenlänge, wobei die Matrix eine vorgegebene Anzahl flächiger Schleifen (1, ..., 4, 8, ..., 13) umfaßt, die durch Verbindungsabschnitte (5, 6, 7) in Reihe geschaltet sind, wobei jede Schleife im wesentlichen symmetrisch zu einer Symmetrieachse ist, die durch die Mitte der Schleife und einen Punkt verläuft, in dem die Schleife mit einem Verbindungsabschnitt verbunden ist und eine Bogenlänge aufweist, die ungefähr der gegebenen Wellenlänge entspricht, dadurch gekennzeichnet, daß die Antennenmatrix eine schachbrettartige Anordnung bildet, wobei sich jede Schleife innerhalb eines Quadrates des Schachbrettes befindet und wobei zwei benachbarte Schleifen durch ein dazwischenliegendes Quadrat getrennt sind, dadurch, daß die Verbindungsabschnitte zwischen benachbarten Schleifen eine Länge von ungefähr einer Viertel Wellenlänge aufweisen und die Schlei.fen zwischen benachbarten Ecken solcher Quadrate verbinden, wobei die elektrische Länge von einem Punkt einer Schleife zu einem Punkt einer benachbarten Schleife, die mit dieser verbunden ist, für Punkte mit derselben Ausrichtung bezüglich der Zentren der entsprechenden Schleifen eine volle Wellenlänge beträgt, und dadurch, daß alle Schleifen und alle Verbindungsabschnitte innerhalb derselben Fläche liegen.

2. Antenne gemäß Anspruch 1, wobei mindestens eine, aber nicht alle Schleifen (8,9) nur teilweise ausgeführt sind.

3. Antenne gemäß einem der vorhergehenden Ansprüche, zwei solcher Matrizen umfassend (11,10,8;13,12,9).

4. Antenne gemäß einem der vorhergehenden Ansprüche, wobei leitfähige Teile aus Draht sind.

5. Antenne gemäß Anspruch 4, wobei die Schleifen und die Verbindungsabschnitte jeder Matrix aus einer einzigen Länge des Drahtes gebildet sind.

6. Antenne gemäß Anspruch 1, wobei die Schleifen und die Verbindungsabschnitte elektrisch isoliert auf einem Trägermittel gehalten werden.

7. Antenne gemäß Anspruch 6, wobei das Trägermittel die Form einer ebenen Platte hat.

8. Antenne gemäß einem der Ansprüche 1 bis 3, wobei die Schleifen und die Verbindungsabschnitte aus einer Leiterbahn auf einer Leiterplatte (14) gebildet werden.

9. Antenne gemäß einem der vorhergehenden Ansprüche, wobei ein Ende jeder Matrix einen Einspeisepunkt (P, S, T) für das Signal bildet.

10. Antenne gemäß einem der vorhergehenden Ansprüche, wobei die symmetrischen Schleifen kreisförmig sind.

11. Antenne gemäß einem der Ansprüche 1 bis 9, wobei die symmetrischen Schleifen quadratisch oder rechteckig sind.

12. Antenne gemäß einem der Ansprüche 1 bis 9, wobei die symmetrischen Schleifen polygonförmig sind.

13. Antenne gemäß der vorhergehenden Ansprüche, wobei die Verbindungsabschnitte gerade sind.

14. Antenne gemäß einem der vorhergehenden Ansprüche, ein leitfähige Grundfläche (15) enthaltend, die in eier vorgegebenen feststehenden Abstandsbeziehung (16,17, 18) zu den Matrizen angeordnet ist.

## Revendications

1. Réseau d'antennes pour transmettre ou recevoir un signal radio d'une longueur d'onde donnée, ledit réseau comportant une pluralité prédéterminée de boucles planes (1, ..., 4, 8,...,13 interconnectées sériellement par des sections de liaison 5, 6, 7, dans lequel chaque boucle est sensiblement symétrique par rapport à un axe de symétrie reliant le centre de ladite boucle et un point où ladite boucle est interconnectée à une section de liaison et présente une longueur d'arc d'environ ladite longueur d'onde, caractérisé en ce que ledit réseau d'antennes forme un agencement analogue à un échiquier, avec chaque boucle située à l'intérieur d'un carré dudit échiquier et avec deux boucles adjacentes séparées par un carré intermédiaire, en ce que des sections de liaison entre boucles adjacentes ont une longueur d'approximativement 1/4 longueur d'onde et connectent lesdites boucles entre des angles adjacents de ces carrés, d'où il résulte que la longueur électrique entre un point d'une boucle et un point d'une boucle adjacente qui lui est connectée correspond à une pleine longueur d'onde, pour des points qui ont la même orientation par rapport aux centres des boucles respectives, et en ce que toutes les boucles et toutes les sections de liaison sont situées à l'intérieur du même plan.

2. Antenne selon la revendication 1, dans laquelle au moins une boucle mais à l'exception de leur totalité (8, 9) n'est mise en oeuvre qu'en partie.

3. Antenne selon l'une quelconque des revendications précédentes, comprenant deux desdits réseaux (11, 10, 8 ; 13, 12,9).

4. Antenne selon l'une quelconque des revendications précédentes, dans laquelle les parties électriques conductrices sont constituées d'un fil.

5. Antenne selon la revendication 4, dans laquelle lesdites boucles et lesdites sections de liaison de chaque réseau sont constituées d'un seul tronçon dudit fil.

6. Antenne selon la revendication 1, dans laquelle lesdites boucles et lesdites sections de liaison sont maintenues d'une manière isolée électriquement sur un moyen de support.

7. Antenne selon la revendication 6, dans laquelle ledit moyen de support a la forme d'un panneau plan.

8. Antenne selon l'une quelconque des revendications 1 à 3, dans laquelle lesdites boucles et lesdites sections de liaison sont formées par une piste conductrice sur une plaquette à circuits imprimés (14).

9. Antenne selon l'une quelconque des revendications précédentes, dans laquelle une extrémité de chaque dit réseau forme un moyen de point d'alimentation (P, S, T) pour ledit signal.

10. Antenne selon l'une quelconque des revendications précédentes, dans laquelle lesdites boucles symétriques sont circulaires.

11. Antenne selon l'une quelconque des revendications 1 à 9, dans laquelle lesdites boucles symétriques sont carrées ou rectangulaires.

12. Antenne selon l'une quelconque des revendications 1 à 9, dans laquelle lesdites boucles symétriques sont polygonales.

13. Antenne selon l'une quelconque des revendications précédentes, dans laquelle lesdites sections de liaison sont rectilignes

14. Antenne selon l'une quelconque des revendications précédentes, comprenant un moyen de plan de masse conducteur (15) disposé dans une relation spatiale fixe donnée (16, 17, 18) avec lesdits réseaux.
